# EUROPEAN PATENT APPLICATION

(11) **EP 0 926 385 A1**
(43) Date of publication of application: **30.06.1999**
(21) Application number: 98310015.7
(22) Date of filing: 07.12.1998
(51) Int. Cl.: F16F 9/53, F16F 13/30, F16F 7/104

(54) **A vibration absorbing system**

(30) Priority: 23.12.1997 GB 9727021
(71) Applicant: Rover Group Limited, Warwick CV34 6RG (GB)
(72) Inventor: Thomas, Gareth Adrian Phillip, Walsgrave, Coventry CV2 2GU (GB)
(74) Representative: Wilson, Alan Stuart

(57) **Abstract**

A vibration absorbing system includes a vibration absorber device 10 comprises a mass 18 on an elastomeric block 11 which is formed with a number of cavities 20 each of which is filled with a liquid 21 which varies in viscosity in response to the an applied voltage at electrodes 22, 24. A high voltage generator 26 is provided for applying a voltage to electrodes to vary the viscosity of the liquid, thereby controlling the stiffness of the block and hence the vibration characteristics of the device. Voltage may be applied selectively to only a proportion of the electrodes 22, 24 to further vary the stiffness of the block 11.

## Description

The invention relates to a system for absorbing vibration and is particularly, but not exclusively, concerned with the absorption of vibration in a vehicle.

Vibration of vehicle components occurs because they are part of a complex spring mass system which is excited by forcing frequencies from the engine transmission, road wheels etc. Such vibration can often be absorbed by attaching a simple form of vibration absorber comprising a mass mounted on a spring, the spring being attached to the component and the mass being allowed to vibrate freely. This tends to change the nature of the vibration of the component from that of a single mass and spring, i.e. a primary oscillator, to that of a two masses and springs in series, i.e. a primary oscillator and a secondary oscillator. The vibration absorber has its own resonant frequency at which it is most effective. Therefore, if the effective frequency of the absorber is correctly tuned to the primary resonant frequency of the component, a marked reduction in the amplitude of vibration of the component at that frequency can be reduced. the component then has two natural frequencies of vibration, one above and one below the original frequency. This can cause problems when the forcing frequencies are highly variable and can therefore produce resonant vibration at either of the two resulting resonant frequencies. This is almost inevitable on a road vehicle with changes in engine speed, road speed and road surface. Another problem with conventional vibration absorbers is that their effectiveness can be adversely affected by variations in the tolerance of component parts making up the damper and by variations in the natural frequency of the component due to vehicle build tolerances, different trim specifications and the extent to which the vehicle is loaded with people and luggage. All of these factors tend to make it difficult for the absorber to be properly tuned to the resonant frequency of the component.

An object of the present invention is to provide a vibration absorbing system which includes a vibration absorber device which will be effective over a range of frequencies.

According to one aspect of the invention there is provided a vibration absorbing system for absorbing resonant vibration of a component the system including a controller and a vibration absorber device which comprises a spring adapted to be attached to the component and a mass fast with the spring and movable relative to the component by deflection of the spring, the absorber device having at least one effective frequency at which it is effective to counteract the vibrating effect on the component of a driving force, wherein the spring comprises a spring member which defines a cavity having walls which can deflect elastically and which contains a liquid of a viscosity which is variable by means of the controller and which thereby controls the effective frequency of the absorber device.

With such a system, the variation in the viscosity of the liquid and hence the stiffness of the spring enables the vibration absorbing characteristics of the device to be optimised and ensure that the natural frequency of the device coincides with a resonant frequency of the component so that it will be effective to absorb vibrational energy at that frequency. It also enables the device to be tuned to more than one discrete resonant frequency as required, or to be tuneable over a range of resonant frequencies.

Conveniently the viscosity is variable in response to the application of a voltage and the system includes means for applying a voltage from the controller to the liquid to vary the viscosity. For example, the vibration absorber device may include spaced apart electrodes immersed in the liquid by which the voltage may be applied to the liquid. Alternatively the viscosity may be variable in response to the application of a magnetic field to the fluid.

The spring member may include at least a portion of said walls which are of elastomeric material, in which case the walls of elastomeric material may completely surround the liquid.

Preferably the spring member defines a plurality of cavities each containing the liquid and the control means can vary the number of said cavities in which the viscosity of the liquid is varied.

The system conveniently includes a sensor for sensing vibration of the component, the sensor being arranged to provide a signal to the controller and the controller being arranged to control the viscosity of the fluid in response to said signal.

When the system is installed in a vehicle, the controller may be arranged to receive running parameters of the vehicle and vary the viscosity of the liquid in response to at least some of the parameters. Such parameters may be selected from engine speed, road speed, road surface and vehicle load.

The invention also includes according to another aspect a vibration absorber device for a system according to the invention, the device comprising a spring adapted to be attached to the component and a mass fast with the spring and movable relative to the component by deflection of the spring, the spring comprising a spring member which defines a cavity having walls which can deflect elastically and which contains a liquid of a viscosity which is in use variable by means of the controller to control the stiffness of the spring.

A device in accordance with the invention will now be described by way of example with reference to the accompanying drawings in which:
Figure 1 is a schematic representation of a component having a vibration absorber attached to it,
Figure 2 is a graph showing the amplitude of vibration induced in the component of Figure 1 as a function of forcing frequency;
Figure 3 is a diagrammatic representation of the vibration absorbing device of Figure 1; and
Figure 4 is a cross section through a spring member forming part of the device of Figures 1 and 3 and showing liquid-filled cavities therein.

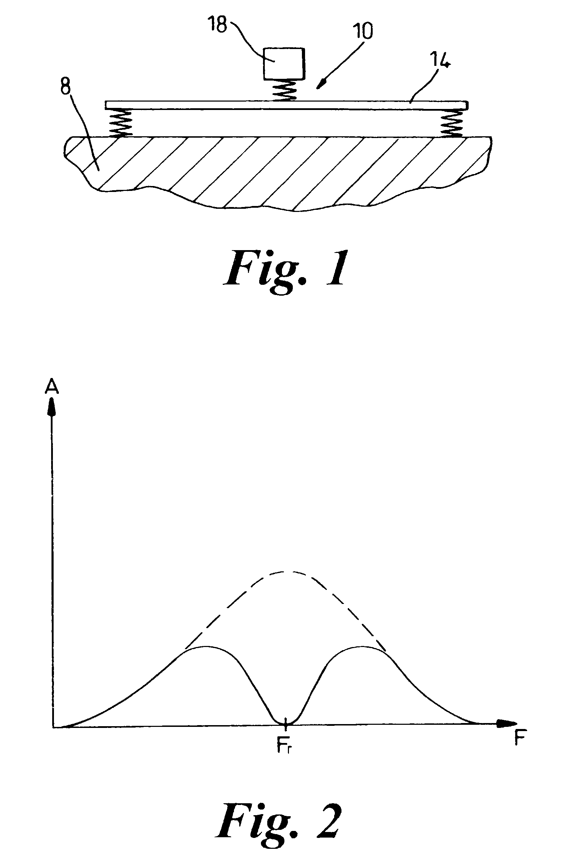

Referring to Figure 1, a vibration absorber device 10 comprises a spring mounted on a vehicle component 14 and carrying a mass 18. The device 10 is resiliently mounted on a base structure 8 which vibrates when in use and therefore forms a source of vibrational energy. This vibrational energy produces vibration of the component 14 at an amplitude which is dependent on the forcing frequency of the source. The absorption device is located on the component 14 at a position where the amplitude of vibration is relatively high when the component vibrates at its natural frequency.

Referring to Figure 2, the amplitude of vibration of the component 14 varies as a function of the frequency of the forcing vibration in the base structure 8. The component has a resonant frequency Fᵣ which is its natural vibration frequency, at which the induced vibration is the greatest. Without the vibration absorber, the amplitude falls off on either side of the natural frequency as shown by the dotted line. However with the vibration absorber attached to the component and tuned to the resonant frequency Fᵣ of the component, the amplitude of vibration of the component varies with the forcing frequency as shown in the solid line. This is because, at the resonant frequency Fᵣ, the energy of vibration from the base structure 8 is transmitted to the mass 18 which vibrates in anti-phase with the forcing vibration. This produces a resultant force on the component 14 which is very small. In theory the resultant force can be reduced to zero so the component 14 remains totally stationary. However in practice small levels of vibration are still present. The efficiency of the vibration absorber falls off as the forcing frequency moves away from the resonant frequency Fᵣ so that there is a peak in the amplitude of vibration of the component 14 on either side of that frequency.

Clearly the vibration absorber is most effective at the frequency to which it is tuned. If that frequency does not coincide exactly with the resonant frequency of the component, or if the range of frequencies over which the component will vibrate is much wider than the range of effective frequencies of the absorber, then significant undesirable vibration can occur. Therefore the frequency to which the absorber is tuned can be controlled as described below so as to overcome this problem.

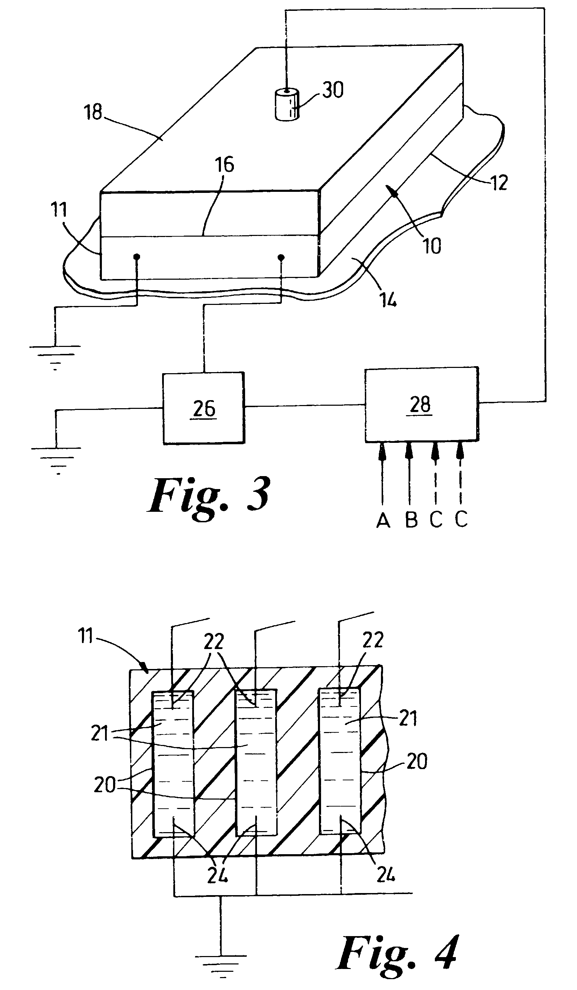

Referring to Figure 3, the vibration absorber device 10 comprises a spring member in the form of a block 11 of elastomeric material which has a lower surface 12 mounted on a vehicle component 14 and an upper surface 16 which carries a mass 18. When the device 10 is used in a vehicle, it is located on the component 14 at a position where there is a significant amplitude of vibration caused by the mass of the component vibrating at a natural frequency which coincides with a forcing frequency from a source such as the engine, transmission, wheels and tyres.

As shown in Figure 4, the elastomeric block 11 is formed with a plurality of cavities 20. Although three cavities are shown in Figure 2, any convenient number of cavities may be provided. Each cavity 20 is filled with an electrorheological liquid 21 such as Bayer Rheobay (Trade Mark).

Each of the cavities 20 has two electrodes 22, 24 arranged therein. The electrodes 22 are immersed in the liquid 21 and are connected to a generator 26 capable of generating a high voltage (about 2000 volts). The electrodes 24 are connected to a suitable return, e.g. an earth such as a vehicle body. The voltage generator 26 is controlled by an electronic control unit (E.C.U.) 28. The E.C.U. 28 receives running parameters such as engine speed A, engine load B, and may also receive other inputs indicated at C. A vibration sensor 30 is mounted on the mass 18 and provides a signal indicative of the vibrational frequency and amplitude of the component 14.

In use, the vibration sensor 30 senses the vibrational frequency and amplitude of the component 14 and provides a signal to the E.C.U. 28. The E.C.U. 28 then controls the voltage generator 26 so as to vary the voltage applied to the liquid 21 in the cavities 20. By applying voltage to the electrorheological liquid, the viscosity of the liquid varies thereby stiffening or softening the elastomeric block 11 so as to minimise the amplitude of vibration of the component 14. By controlling which of the fluid filled cavities has a voltage applied to it, and the magnitude of that voltage, it is possible to tune the device to a number of discrete frequencies, which is useful where the component has more than one resonant frequency at which it is liable to vibrate. It is also possible to tune the device to substantially any frequency within a range or band of frequencies. This is useful if the component has a broad band of resonant frequencies which cannot be damped out be a single frequency absorber device, or if adjustment is required to the tuned frequency of the device to compensate for variation, for example within build tolerances.

Instead of being mounted on the mass 18, the vibration sensor 30 may be mounted directly on the vehicle component 14. Instead of using a vibration sensor 30, the viscosity of the liquid can be controlled in an open loop system on the basis of the information derived from the signals A, B and C. As it may be possible to determine the way in which the first member 14 will vibrate at, say, certain engine speeds and/or engine load, the control of the high voltage generator 26 can be pre-programmed within the E.C.U. 28 to vary viscosity of the fluid 21 appropriately to minimise transmission of vibration to the member 18. However, the closed loop control using the sensor 30 has the advantage that variation in vehicle build, load and trim level are more readily accommodated.

The output of the generator 26 can also be connected to a switching arrangement (not shown) connected to individual sets of electrodes 22, 24. The switching arrangement may be controlled by the E.C.U. 28 so that the viscosity of liquid 21 in selected cavities 20 may be varied, thereby extending the range of control of the stiffness of the block 11.

## Claims

1. A vibration absorbing system for absorbing resonant vibration of a component (14) the system including a controller (28) and a vibration absorber device (10) which comprises a spring (11) adapted to be attached to the component and a mass (18) fast with the spring and movable relative to the component by deflection of the spring, the absorber device having at least one effective frequency at which it is effective to counteract the vibrating effect on the component (14) of a driving force, characterized in that the spring (11) comprises a spring member which defines a cavity (20) having walls which can deflect elastically and which contains a liquid (21) of a viscosity which is variable by means of the controller (28) and which thereby controls the effective frequency of the absorber device (10).

2. A system according to claim 1 characterized in that the absorber device (10) is arranged to vibrate in antiphase with the driving force at said at least one effective frequency.

3. A system according to any foregoing claim characterized in that the spring member (11) includes at least a portion of said walls which are of elastomeric material.

4. A system according to any foregoing claim characterized in that the spring member (11) defines a plurality of cavities (20) each containing the liquid (21) and the control means (28) can vary the number of said cavities in which the viscosity of the liquid is varied.

5. A system according to any foregoing claim characterized in that it includes a sensor (30) for sensing vibration of the component, the sensor being arranged to provide a signal to the controller (28) and the controller being arranged to control the viscosity of the fluid (21) in response to said signal.

6. A system according to any foregoing claim when installed in a vehicle, characterized in that the controller (28) is arranged to receive running parameters of the vehicle and to vary the viscosity of the liquid (21) in response to at least one of said parameters.

7. A system according to claim 6 characterized in that said parameters are selected from engine speed, road speed, road surface and vehicle load.

8. A system according to any foregoing claim characterized in that the device (10) is tuneable to any of a plurality of discrete frequencies and the controller (28) is arranged to select which of said frequencies the device is tuned to.

9. A system according to any foregoing claim characterized in that the device (10) is tuneable within a range of frequencies and the controller (28) is arranged to select which of said range of frequencies the device is tuned to.

10. A vibration absorber device for a system according to any foregoing claim, characterized in that the device (10) comprises a spring (11) adapted to be attached to the component and a mass (18) fast with the spring and movable relative to the component by deflection of the spring, the spring comprising a spring member (11) which defines a cavity (20) having walls which can deflect elastically and which contains a liquid (21) of a viscosity which is in use variable by a controller to control the stiffness of the spring.
